# EUROPEAN PATENT SPECIFICATION

(11) **EP 3 001 761 B1**
(45) Date of publication and mention of the grant of the patent: **23.10.2019**
(21) Application number: 14306501.9
(22) Date of filing: 26.09.2014
(51) Int. Cl.: H04W 76/14, H04W 72/12, H04W 92/18

(54) **Allocating resources to user equipment for uplink cellular and direct device to device communications**
Zuweisung von Ressourcen an ein Benutzergerät zur aufwärtsgerichteten zellularen und direkten Vorrichtung-zu-Vorrichtung-Kommunikation
Attribution de ressources à un équipement utilisateur pour des communications de dispositif à dispositif directes et cellulaires à liaison montante

(43) Date of publication of application: 30.03.2016
(73) Proprietor: Alcatel Lucent, 91620 Nozay (FR)
(72) Inventor: Worrall, Chandrika, Swindon, Wiltshire SN5 7DJ (GB); Lim, Seau Sian, Swindon, Wiltshire SN5 7DJ (GB)
(74) Representative: Mills, Julia

(56) References cited:
- EP-A1- 2 914 055
- WO-A1-2014/069223
- US-A1- 2013 322 413
- GÃ BOR FODOR ET AL: "Design aspects of network assisted device-to-device communications", IEEE COMMUNICATIONS MAGAZINE, IEEE SERVICE CENTER, PISCATAWAY, US, vol. 50, no. 3, 1 March 2012 (2012-03-01), pages 170-177, XP011429640, ISSN: 0163-6804, DOI: 10.1109/MCOM.2012.6163598

## Description

### FIELD OF THE INVENTION

The present invention relates to a method, computer program, user equipment and network node for facilitating communication between user equipment.

### BACKGROUND

Wireless telecommunication systems are known. In such systems network connectable devices or mobile communication devices such as user equipment, mobile telephones and similar are typically operable to communicate with base stations provided by network providers.

In known wireless telecommunication systems, radio coverage is provided to network connectable devices within areas known as cells. Abase station is located in each cell to provide radio coverage. Typically, network connectable devices in each cell are operable to receive information and data from a base station and to transmit information and data to a base station. This information or data can then be transmitted to further network nodes within the wireless communication network, allowing network connectable devices in different cells to communicate with each other as they roam through the wireless communication system. A number of base stations are provided and are distributed geographically in order to provide a wide area of coverage to network connectable devices.

In some situations it maybe desirable for user equipment (UE) that are located in proximity to each other to transmit information directly to each other rather than via the network nodes of a wireless communication network. For such direct device-to-device communication the channel used for this communication (comprising time - frequency resource over which a signal is to be transmitted) should, where possible, be allocated to a device transmitting the signal in a way that avoids or at least reduces signal collision.

There are two ways of doing this, one is under the control of the wireless communication system where a network node will allocate the resource and the other under control of the user equipment where it will select a resource from a pool of resources reserved for such communications. The former clearly has advantages of reduced collisions as it is under central control but it will only be applicable where the user equipment is within coverage of a network cell. Currently the network is responsible for allocating resources for cellular communications that is communications between network connectable devices via network nodes. It would be desirable to be able to allocate resources for both direct and cellular communications between user equipment in an efficient way that reduced collisions.

US2013/0322413 discloses a way of obtaining resource for D2D transmission from a network node. The UE may request resource for a D2D transmission. The network node may signal resource allocation or scheduling assignments for a specific D2D link and the UE may differentiate and identify the purpose of the scheduling assignments.

"Design Aspects of network Assisted Device- to-Device Communications" by Fodor et al. pages 170 - 177, IEEE Communications Magazine March 2012 discloses in general terms possible ways of allocating resources for D2D communications which include the network node allocating dedicated resources for D2D communications or it allocating resources in a similar manner to the way in which it allocates resources for cellular communications, or it having a pool of resources for a set of D2D pairs.

WO2014/069223) discloses a system where the user equipment perform D2D communication under the control of a base station. The user transmits a D2D buffer status report indicating an amount of non-transmitted D2D data and a cellular communication buffer status report indicating an amount of non-transmitted cellular communication.

### SUMMARY

According to a first aspect of the present invention there is provided a method performed at a user equipment of requesting uplink resource from a network node within a wireless network for transmitting uplink data, comprising: selecting a scheduling request and a resource for transmission of said scheduling request, at least one of said scheduling request and resource being selected in dependence upon whether said uplink data is to be transmitted as a cellular communication to at least one other user equipment transmitted via at least one network node or as a direct communication directly to at least one other user equipment; transmitting said scheduling request on said resource, transmission of said scheduling request indicating whether said request is related to said cellular communication or may be related to said direct communication.

The indication of the communication may be made explicitly by a flag within the scheduling request for example, or it may be implicit in the resource selected to transmit the request.

In some embodiments, said scheduling request is transmitted on a physical uplink control channel, a time of transmission on said physical uplink control channel indicating whether said request is related to said direct communication or to said cellular communication.

Although as noted above, the scheduling request may indicate the nature of the communication in a number of ways, in some embodiments the scheduling requests are transmitted in a time division multiplex manner and in such a case the time slots dedicated to transmitting requests for a particular user equipment can be sub divided such that some indicate a cellular communication and others a direct communication. Thus, the time slot that the request is transmitted on is an indication of whether the scheduling request is related to a direct communication or to a cellular communication.

Alternatively, in some embodiments, said scheduling request is transmitted on one of at least two different physical uplink control channel, said physical uplink control channel on which said scheduling request is transmitted indicating whether said request is related to said direct communication or to said cellular communication.

Rather than time division multiplexing of these requests, sub-frequency/domain independent configuration can be used whereby the scheduling requests are transmitted on different channels, such that they can be differentiated between by the channel that they are received on.

In some embodiments, a plurality of predetermined resources are reserved for transmitting scheduling requests related to said cellular communications for said user equipment and a subset of said predetermined resources are reserved for transmitting scheduling requests related to either said direct communications or to said cellular communications, said user equipment selecting one of said predetermined resources to transmit said scheduling request in dependence upon whether said request is related to said cellular or said direct communication.

In some embodiments, said scheduling request is transmitted on a physical uplink control channel, a plurality of predetermined times being reserved on said physical uplink control channel for transmitting scheduling requests related to said cellular communications for said user equipment, a subset of said predetermined times being reserved for transmitting scheduling requests related to either said direct communications or to said cellular communications, said user equipment selecting one of said predetermined times to transmit said scheduling request in dependence upon whether said request is related to said cellular or said direct communication.

In some embodiments, rather than reserving or dedicating resources to either cellular or direct communications, some resources such as timeslots where time division multiplexing is used may be dedicated to cellular communications which occurs more often, while others can be used for either. It should be recognised that although direct communications may need to be allocated a resource as a priority, such communications occur reasonably rarely and thus, providing them with their own dedicated scheduling request resource can be expensive on resource. Thus, in some embodiments, a subset of the dedicated resources dedicated to the scheduling requests for cellular communications are also available for use for direct communication. Thus, the network node receiving a scheduling request on such a resource will recognise that the communication maybe a direct communication or it may be a cellular communication or there may be both awaiting transmission. In such a case, it will prioritise the request as it may be related to a direct transmission and it will transmit a resource grant that is sufficient for at least the larger of the two status reports so that the grant can deal with either of the pending status reports. If both are pending, then if the grant is sufficiently large both will be transmitted, otherwise the user equipment will prioritise one of them. This may be the direct communication as this is generally more urgent or it may in some cases be the communication relating to the uplink data that was received first.

In some embodiments, the method comprises a further step of following receipt of a resource grant granting a resource to said user equipment from said network node, transmitting a status report on said resource indicating an amount of said uplink data.

The user equipment will have transmitted the scheduling request indicating it has uplink data to transmit and in response to this, it will receive a resource grant allowing it to transmit a status report which will indicate the quantity of the data to be transmitted such that appropriate resource can be allocated to the user equipment for transmission of this data. The status report may indicate other things too such as the nature of the communication. In this regard where the resources for the direct communication are a subset of those reserved for cellular communication and simply indicate that one or both of the two communications are pending, then it is advantageous if the status report itself indicates the nature of the communication such that the allocation of resource for this communication can be suitably prioritised.

In some embodiments, said method comprises not transmitting a subsequent scheduling request until said status report has been transmitted.

One way of avoiding collision between scheduling requests where there is uplink data for different communications waiting to be transmitted is not to transmit a scheduling request relating to subsequent uplink data until a status report for a previous scheduling request has been transmitted. Although this may avoid collisions, it clearly has latency issues associated with it.

In some embodiments, subsequent scheduling requests may be transmitted before receipt of the resource grant and in such a case, in some cases the user equipment prioritises the uplink data and transmits the status report corresponding to the uplink data it believes to have the highest priority when it receives a resource grant. In this regard, it may be the uplink data it received first or it may be uplink data for a direct communication or it may be uplink data which it has received with some indication of it having a high priority.

In some embodiments, the method comprises following transmission of said scheduling request setting a timer, and in response to receipt of a resource grant granting a resource to said user equipment from said network node within a time set by said timer, transmitting a status report on said resource indicating an amount of said uplink data, and in response to no resource grant being received within said time, transmitting said scheduling request again at a later time.

Another way of reducing or avoiding collision is to define the scheduling request and the resource grant with a time relationship such that a user equipment sets a timer after sending the scheduling request and if a grant is received before the timer expires, the UE uses this grant for the status report of the scheduling request for which it set the timer. If no resource is granted within this time, then the scheduling request is transmitted again at a later time and the timer set again. In this way, scheduling requests can be set at different times with their own timers and grants received within a particular timer will relate to those scheduling requests.

In some embodiments, following transmission of said scheduling request, when said uplink data is to be transmitted as said direct communication and a next scheduling request transmission opportunity arises before said resource grant has been received, re-transmitting said scheduling request at said next scheduling request opportunity.

An alternative way of managing transmission of scheduling requests for high priority communications such as direct communications is to retransmit the scheduling request when an opportunity arises where no resource grant has been received. In this regard, scheduling requests may have dedicated timeslots within a channel at which they can be transmitted. If this is the case, then a new opportunity arises when one of these timeslots occurs and if no grant has been received the scheduling request can be retransmitted.

A second aspect of the present invention provides a user equipment comprising: at least one transmission buffer for storing uplink data prior to transmitting said uplink data; selecting logic operable in response to detecting data in said at least one transmission buffer to select a scheduling request and a resource for transmission of said scheduling request, at least one of said scheduling request and resource being selected in dependence upon whether said uplink data is to be transmitted as a cellular communication to another user equipment transmitted via at least one network node or as a direct communication directly to at least one other user equipment; and transmission logic for transmitting said selected scheduling request on said resource, transmission of said scheduling request indicating whether said request is related to said cellular communication or may be related to said direct communication.

A third aspect of the present invention provides a method performed at a network node of allocating resources for uplink communications comprising: receiving from a user equipment a scheduling request; determining from said scheduling request whether said scheduling request is related to a cellular communication where uplink data is transmitted to at least one other user equipment transmitted via at least one network node or whether it may be related to a direct communication where said uplink data is transmitted directly to at least one other user equipment; and in dependence upon said determining step transmitting a resource grant granting a resource to said user equipment from said network node for transmitting a status report for said corresponding communication said status report indicating an amount of said uplink data to be transmitted in said uplink communication.

Where a wireless communication network controls resources for transmission of data by user equipment both in cellular communication where the data is transmitted via the network and direct device to device communication where user equipment communicate directly with each other, then it is advantageous if on receiving a scheduling request from the user equipment, the network node is able to determine from the scheduling request what type of communication it relates to and in this way it can allocate the appropriate resources with the appropriate priority. In this regard, cellular communications may not have a particular urgency, whereas direct communications which may be public safety communications may have a high urgency and therefore require resources quickly. Furthermore, the status reports for each type of communication indicating the amount of data to be sent may be the same or they maybe different, where they have different sizes then it is important that the appropriate amount of resource for transmitting the relevant status reports is provided to the user equipment. Additionally, when the resource itself is provided to the user equipment then where different resources are provided for each of the different types of communication, it is important that the right type of resource is allocated.

In some embodiments, said determining step comprises determining whether said scheduling request is related to said cellular communication or to said direct communication in dependence upon at least one of: a time slot within a physical uplink control channel that said scheduling request is located in; and a physical uplink control channel that said scheduling request is located in.

Although, determining whether the scheduling request is related to a particular type of communication can be done in a number of ways, for example by an indicator within the scheduling request itself, in some embodiments the scheduling request is for the sake of economy only a single bit acting as a flag and in which case, what type of communication it is related to may be indicated by the resource used to transmit it. This may be a timeslot within a physical uplink control channel that the scheduling request is located in or a physical uplink control channel that the scheduling request is located in. In this regard, the scheduling request may be transmitted using either time division or frequency division multiplexing and in which case, a particular frequency or uplink control channel can be used to indicate the type of scheduling request or a timeslot within a time division multiplex control channel could indicate the type of scheduling request.

In some embodiments, the method comprises a further step of, in response to determining that said scheduling request is related to said direct communication, starting a timer and transmitting said resource grant within a predetermined time measured by said timer.

In some embodiments, where the network node determines that the scheduling request is related to a direct communication, then it recognises that this is a high priority request and starts a timer and ensures that the resource grant is transmitted within a predetermined time measured by the timer. This guarantees to the user equipment that within such a time a resource grant will be received and this may help reduce collision such that the user equipment is aware once it has sent a scheduling request for a direct communication that a grant will be received in a predetermined time and will relate to this scheduling resource request.

In some embodiments, said determining step comprises determining whether said scheduling request is related to said cellular communication or whether it may be related to either said direct communication or said cellular communication in dependence upon a resource that said scheduling request is located in and where said scheduling request is for either said cellular or said direct communication, allocating an uplink grant with sufficient resource to accommodate status reports for either said cellular communication or said direct communication.

In some cases, the scheduling request may indicate whether it is related to cellular communication or to a direct communication while in others it may indicate either a cellular communication or that the communication maybe either. In this regard, it maybe advantageous for a subset of the dedicated resource for the cellular communication to be used for either cellular or direct communication. Providing dedicated resource for direct communication may not be ideal as although direct communication may occur with a high priority it may not occur very often and dedicated resources are expensive. Thus, by providing some resources that can be used for either, the network node, on receipt of a request from such a resource, will recognise that the resource to be granted for transmitting the status report should be sufficiently large to accommodate either type of status reports that may be received relating to either a direct or a cellular communication. This grant should also be transmitted with a high priority as it may be for a direct communication. In such a case the status report itself should then distinguish between the direct and cellular communication so that before allocating resources for the actual communication, the network node is aware of the type of communication.

In some embodiments, the network node may allocate enough resource to accommodate both a status report for a direct communication and a status report for a cellular communication. In this regard, it may be that where there is uplink data pending for both, then one of the subsets of resources that can be used for either communications can be used for a scheduling request and the resource granted will be sufficient to transmit both status reports.

A fourth aspect of the present invention provides a network node comprising: determining logic operable to determine from a received scheduling request whether said scheduling request is related to a cellular communication where uplink data is transmitted to at least one other user equipment via at least one network node or whether it may be related to a direct communication where said uplink data is transmitted directly to at least one other user equipment; and transmitting logic operable in dependence upon said determining logic to transmit a resource grant granting a resource to said user equipment from said network node for transmitting a status report for said corresponding communication, said status report indicating an amount of said uplink data to be transmitted in said uplink communication.

A fifth aspect of the present invention provides a computer program operable when executed by a computer to control said computer to perform a method according to a first aspect or a third aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a plurality of user equipment and a cell of a wireless communication network;
Figure 2 illustrates the transmission of scheduling requests for cellular and direct communications on dedicated time division multiplexed resources according to an embodiment;
Figure 3 illustrates the transmission of scheduling requests for cellular and direct communications on dedicated frequency division multiplexed resources according to an embodiment;
Figure 4 illustrates the transmission of scheduling requests for cellular and direct communications on dedicated time division multiplexed resources, where the resources for direct communications are a subset of the cellular resources according to an embodiment;
Figure 5 illustrates one example a new buffer status report format for direct communications according to an embodiment;
Figure 6 illustrates a further example a new buffer status report format for direct communications according to a further embodiment; and
Figures 7a and 7b show conventional buffer status report formats.

### DESCRIPTION OF THE EMBODIMENTS

Before discussing the embodiments in any more detail, first an overview will be provided.

It maybe desirable on occasion to allow direct user equipment to user equipment communication. This communication may be between one user equipment and multiple user equipment within a group of which the user equipment is a member. Providing resources for such communications without an undue amount of collision is challenging. One form of direct user equipment to user equipment communication that is currently being standardized in 3GPP is ProSe or public safety communication. The public safety requirements require a public safety UE to support both ProSe and cellular communication at the same time. ProSe communication supports two mode, mode 1 which is used for in coverage ProSe communication and mode 2 is used for out of coverage ProSe communication. During the in coverage communication, the network (eNB) is in charge of the control of the ProSe communication where the eNB schedules the ProSe UEs providing scheduling grant for the ProSe communication. This is seen as floor control within a group of UEs where only one UE within the group will be transmitting the data at a time allowing for half duplex UE operation. The ProSe UE requests the scheduling grant from the eNB by transmitting a buffer status report BSR indicating the status of a transmission buffer, that is the quantity of uplink data to be transmitted in the communication.

The procedure followed is that when data is available for transmission, a scheduling request SR is triggered followed by a transmission of BSR to the eNB. This procedure of SR triggering and BSR transmission is also used in requesting the resource grant from the network in legacy cellular communication. Considering that the ProSe UE is required to support simultaneous ProSe and cellular communication, and the scheduling control is performed by the same eNB, following a similar procedure for both is efficient in resources, but may require some type of differentiating between the two communications when requesting resource.

In effect re-using legacy format and procedures as much as possible in order to minimize the specification impacts is desirable, however, the ProSe requirements of high priority transmissions need to be allowed for and interaction between the SR and/or BSR communication for ProSe and cellular communication should be minimised or at least reduced where possible.

A method for SR/BSR handling is proposed which takes into account the interaction between the ProSe and cellular communication and at the same time reduces the specification impacts.

The scheduling request procedure used in the current LTE standard is specified in TS 36.321 and the main concept is highlighted below.

Scheduling request (SR) transmission is triggered when data arrives at an uplink UL transmission buffer belonging to a radio bearer where SR masking is not enabled and there is no UL grant available for the transmission. The data arrival at the UL transmission buffer is defined either as arrival of data at the PDCP buffer or at the RLC buffer. The radio bearer is mapped to a logical channel (one to one mapping), therefore, the data arrival at PDCP and RLC buffer can be considered equivalent with regards to scheduling request trigger.

For the transmission of SR, dedicated scheduling request (D-SR) resources is configured by the network per UE. Only one D-SR configuration per UE is performed in the current standard.

After the resource is granted to the UE, the UE transmits the buffer status report (BSR) which includes the amount of data available for the transmission at the UE. After the transmission of BSR MAC CE (buffer status report, medium access control, control element), the triggered SR is cancelled at the UE.

Where a network is to manage the allocation of resources for both direct and cellular communications, it is important that the network is aware early in the procedure which type of communication resource is being requested as this may affect the priority of the allocation. In this regard public safety direct communications will need to be allocated resources with a high priority if the system is to provide the desired functionality. The scheduling request SR is sent early in the procedure and thus, using this to differentiate between the communications means that even at the very early stage of allocating resource for transmission of the buffer status report direct communications can be prioritised. However, legacy scheduling requests are a single bit transmitted on a dedicated resource. Addressing this issue with the provision of further dedicated resources might allow the two communications to be discriminated between, albeit that the provision of dedicated resources is expensive on resources.

Thus, embodiments seek to address the problem by enhancing the SR used.

SR configuration currently uses dedicated resources on PUCCH. Generally dedicated resources are used in the system with care as unused dedicated resources cost the system. Considering that ProSe incidents may be relatively rare and D-SR is only used to inform the network of the scheduling request, it would seem at first sight beneficial to share the same D-SR resources between the ProSe and cellular communication. However, as a SR is triggered whenever new data is arrived at the UE either for ProSe or cellular communication and the UE transmits the SR to the network, if the network is not aware of whether the SR request is for ProSe communication or cellular communication it does not know the priority with which a resource should be granted at this point. Therefore, were the SRs the same for both the network would be required to grant scheduling resources for the transmission of the BSR as soon as possible to cater for urgent ProSe requirements. Generally, the network has flexibility on when to provide the scheduling grant upon the reception of SR, however with single SR approach, the grant would need to be provided as soon as possible.

Thus, this is addressed in embodiments by providing multiple SR configurations to support both ProSe and cellular communication.

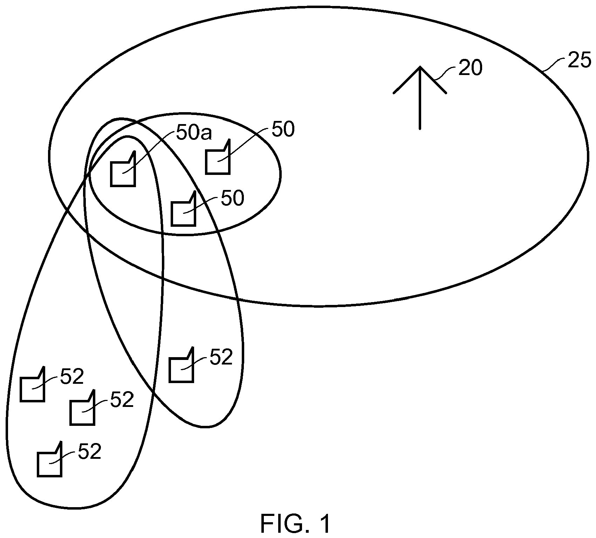

Figure 1 shows schematically a network node 20 supporting a radio cell 25 in which there are multiple user equipment 50. There are also user equipment 52 outside the coverage of the cell. The user equipment 50 are configured to perform cellular communications and direct communications with each other. In this embodiment, they are allocated to particular groups and can communicate to each other within these groups. In this regard, a communication within a group may have a particular priority depending on the circumstances and this priority may change. For the user equipment that are within radio cell 25, when they wish to perform direct communication, then they may do so using resources allocated under the control of network node 20.

In this regard, in order to be able to communication with each other, they need to be allocated a resource on which to transmit a signal. Generally, direct communications between user equipment are performed on half duplex channels such that data is transmitted in one direction only. In order to avoid collision between user equipment, it is advantageous if the resource is allocated to a user equipment that wishes to form a direct communication and where this is under control of a network node, it can ensure that it does not allocate the same resource to other user equipment. Where the user equipment are out of network coverage, then they will need to allocate the resources in a different way. Generally, this is done from a pool of resources and the risk of collision is higher.

When a user equipment 50a within cell 25 has data in its uplink buffer for transmission to a group of user equipment of which it is a member, then in order to be able to do this, it transmits a scheduling request to network node 20 indicating that it requires resource for this communication. In this regard, as the communication is to be a direct communication, then it will send a scheduling request that indicates this in some way. It maybe a dedicated scheduling request dedicated to such communications or it may be a request sent on a dedicated resource that is either dedicated to a particular communication form the user equipment or shared between cellular communications and direct communications for that user equipment.

In response to receipt of such a scheduling request, the network node will generate a scheduling grant which will allocate resources for transmission of a buffer status report indicating the amount of uplink data within the transmission buffer. Where the network node 20 recognises that the communication is or maybe a direct communication then it will allocate this resource with a high priority.

In addition to a quantity of uplink data, the buffer status report may indicate further things such as an indication of the group of user equipment to which the communication is directed and the priority of this group. In this regard, the user equipment may be a member of several groups of user equipment and depending on circumstance, one or other may currently have the highest priority. In the public safety domain for example, the user equipment may communicate with user equipment belonging to the Police, user equipment belonging to the Fire Brigade and user equipment belonging to the ambulance service. Depending on the incident, it may be more important that the ambulance user equipment receive the information first while in other circumstances, it may be more important that it goes to another one of the services.

In any event, where the network node recognises that the scheduling is or may be for a direct communication, it will allocate a scheduling grant for transmission of the buffer status report with a high priority. In this way, high priority functionality is provided for direct communication using a system and format that is similar to that used for conventional cellular communications.

Once the scheduling grant has been received at user equipment 50a, then it will transmit the buffer status report and in response to this will be allocated resources by the network node for transmission of its communication to the group of user equipment with which it wishes to communicate.

In the case that the user equipment transmitted the scheduling resource that is a shared dedicated scheduling resource to both direct and cellular communications, then the buffer status report itself will indicate the type of communication, that it is whether it is a direct or a cellular communication and it is at this point that the network node will be aware of the type of communication. In this regard, where there is a shared dedicated resource for the scheduling request then the network node will always grant the resource for the buffer status report at a high priority and once it has received the buffer status report and is aware of the type of communication, then it is at this point prioritise the allocation of resources for the communication depending on the type of communication.

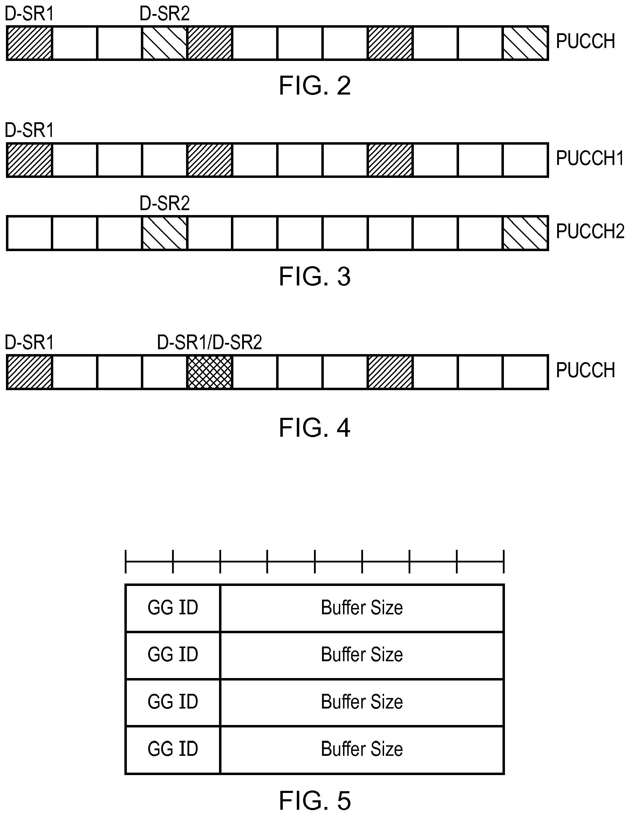

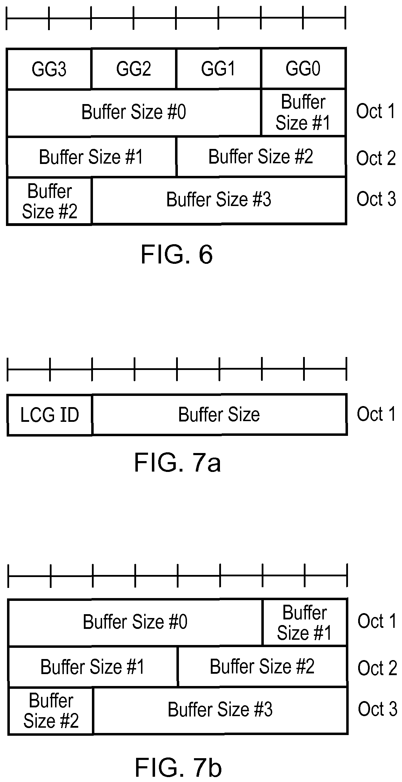

It should be noted that where the scheduling requests are dedicated exclusively to a direct or cellular communication, then the buffer status report maybe the same for both types of communication and may be legacy buffer status reports. In other embodiments, they may in any case be different for the two types of communication. The different types of buffer status reports pertaining to direct communications are shown in Figures 5 and 6 for user equipment communicating with different groups of user equipment of which the user equipment is a member, while Figure 7 shows legacy formats which may be used for the buffer status reports of cellular communications and in some embodiments for direct communications too.

One example of independent SR configuration is shown in Figure 2, where both SR configurations indicating either cellular or direct communications are time multiplexed on the same PUCCH (physical uplilnk control channel). Thus the type of communication for which the resource is requested can be determined from the time location of the SR on the channel.

Alternatively, sub-carrier/frequency domain independent configuration can be performed, where SRs for Prose and cellular communications are configured on different PUCCHs as is shown in Figure 3, the SR being identified from the frequency channel it appears on. In both the examples there are more dedicated resources provided to cellular communications which occur more often than there are to the direct or ProSe communications which are rarer but have a high priority.

Figure 4 shows the time division multiplexing of resources as in Figure 2 but where the resources for direct communications are a subset of those for cellular communications. In this way additional resources do not need to be dedicated to direct communications, and the network node is aware that a communication may be a direct communication if it receives a scheduling request on the resource which is the subset (D-SR1/D-SR2).

As noted above the use of multiple SRs to address ProSe and cellular communication with the configuration of different D-SR (dedicated scheduling resources) may take two forms:
A) Separate and independent D-SRs for ProSe and cellular communication (as in Figures 2 and 3), within some embodiments a timer based method to avoid the SR collision and ambiguity in the grant is provided.
B) Separate and dependent D-SRs for ProSe and cellular communication (as in Figure 4). With this approach, SR of one type of communication becomes a subset of D-SR resources configured for the other. For example, D-SR is configured for cellular communication and a sub-set of D-SR resources with reduced frequency is configured for direct communication.

Approaches A to B have different behaviour in terms of SR triggering interaction, transmission, BSR transmission and SR cancellation.

### For approach A:

SR triggers are considered independently. When the SR is triggered the corresponding BSR is transmitted to the network. However it is likely that both SRs triggered at the same time or the second type of SR is triggered while the first type of SR is transmitting or the UE is waiting for the BSR grant. In order to avoid SR collision and ambiguity, the UE may transmit one SR at a time and wait for the second type of SR until the first corresponding BSR is sent. However this has a disadvantage as the second type of SR is delayed.

In another approach, the receive grant and the SR are defined by a time relationship. For example, the UE is configured with a timer and after sending the SR the UE starts the corresponding SR timer. If a grant is received for the UE before the timer expires, the UE uses the grant for the BSR transmission of the corresponding SR. the legacy SR can be kept unchanged. With the ProSe SR a new timer value is introduced and the network shall provide the grant before the timer expiry. Either the same or different BSR formats can be used for Prose and cellular system.

Yet another approach is to design different BSR formats for the ProSe and cellular system. With this approach, upon reception of the grant, the UE include the BSRs (both type of BSRs available) and the grant can accommodate both BSRs. If the grant is not big enough to accommodate both BSRs, the UE follow a prioritization of the BSRs at the UE. Prioritization of BSRs can be left to the UE implementation or specified or configured by the network.

In one prioritization method, the ProSe BSR is always prioritized over cellular BSR. In another method, the BSR corresponding to the first transmitted SR is prioritized over the other.

The triggered SR is cancelled when the corresponding BSR is transmitted to the network. In some cases, where a grant has not been received and another SR transmission opportunity arises, for example a dedicated resource becomes available, then the SR may be transmitted again its retransmission cancelling the previous SR.

### For approach B:

The network configures the two D-SR configuration in such a way that one D-SR configuration is a sub-set of the other. Therefore, the network is aware when receiving one D-SR that this may indicate pending uplink data for both type of communications (ProSe and cellular). At these instances, the network allocates a big enough grant to accommodate both types of BSRs.

From the UE perspective, the UE transmits the corresponding BSRs upon reception of the grant. The triggered SR is cancelled when the corresponding BSR is sent.

As noted previously, although the format used for BSRs may be the legacy format in some embodiments the format for ProSe communications is different to those for cellular communications. This is advantageous for approach B in particular. Two examples of the new formats that maybe used are shown in figures 5 and 6 which show formats for direct communication between user equipment within groups. The order that the group ID appears in the BSR indicates its priority, allowing the groups to have dynamic priority depending on circumstances. Conventional formats which may be used either just for cellular communications or in some embodiments for both types of communications are shown in Figure 7a and 7b.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method performed at a user equipment (50) of requesting uplink resource from a network node (20) within a wireless network, for transmitting uplink data, comprising:
Selecting a scheduling request and a resource for transmission of said scheduling request at least one of said scheduling request and resource being selected in dependence upon whether said uplink data is to be transmitted as a cellular communication to at least one other user equipment transmitted via at least one network node or as a direct communication directly to at least one other user equipment;
transmitting said scheduling request on said resource, transmission of said scheduling request indicating whether said request is related to said cellular communication or may be related to said direct communication.

2. A method according to claim 1, wherein said scheduling request is transmitted on a physical uplink control channel, a time of transmission on said physical uplink control channel indicating whether said request is related to said direct communication or to said cellular communication.

3. A method according to claim 1, wherein said scheduling request is transmitted on one of at least two different physical uplink control channel, said physical uplink control channel on which said scheduling request is transmitted indicating whether said request is related to said direct communication or to said cellular communication.

4. A method according to any one of claims 1 to 3, wherein a plurality of predetermined resources are reserved for transmitting scheduling requests related to said cellular communications for said user equipment and a subset of said predetermined resources are reserved for transmitting scheduling requests related to either said direct communications or to said cellular communications, said user equipment selecting one of said predetermined resources to transmit said scheduling request in dependence upon whether said request is related to said cellular or said direct communication.

5. A method according to any preceding claim, comprising a further step of following receipt of a resource grant granting a resource to said user equipment from said network node, transmitting a status report on said resource indicating an amount of said uplink data.

6. A method according to claim 5, comprising not transmitting a subsequent scheduling request until said status report has been transmitted.

7. A method according to any one of claims 1 to 4, comprising following transmission of said scheduling request setting a timer, and in response to receipt of a resource grant granting a resource to said user equipment from said network node within a time set by said timer, transmitting a status report on said resource indicating an amount of said uplink data, and in response to no resource grant being received within said time, transmitting said scheduling request again at a later time.

8. A method according to any one of claims 1 to 5, wherein following transmission of said scheduling request, when said uplink data is to be transmitted as said direct communication and a next scheduling request transmission opportunity arises before said resource grant has been received, re-transmitting said scheduling request at said next scheduling request opportunity.

9. Auser equipment (50) comprising:
at least one transmission buffer for storing uplink data prior to transmitting said uplink data;
selecting logic operable in response to detecting data in said at least one transmission buffer to select a scheduling request and a resource for transmission of said scheduling request at least one of said scheduling request and resource being selected in dependence upon whether said uplink data is to be transmitted as a cellular communication to another user equipment transmitted via at least one network node or as a direct communication directly to at least one other user equipment; and
transmission logic for transmitting said selected scheduling request on said resource, transmission of said scheduling request indicating whether said request is related to said cellular communication or may be related to said direct communication.

10. A method performed at a network node of allocating resources for uplink communications comprising:
receiving from a user equipment a scheduling request;
determining from said scheduling request whether said scheduling request is related to a cellular communication where uplink data is transmitted to at least one other user equipment transmitted via at least one network node or whether it may be related to a direct communication where said uplink data is transmitted directly to at least one other user equipment; and
in dependence upon said determining step transmitting a resource grant granting a resource to said user equipment from said network node for transmitting a status report for said corresponding communication said status report indicating an amount of said uplink data to be transmitted in said uplink communication.

11. A method according to claim 10, wherein said determining step comprises determining whether said scheduling request is related to said cellular communication or to said direct communication in dependence upon at least one of:
a time slot within a physical uplink control channel that said scheduling request is located in; and
a physical uplink control channel that said scheduling request is located in.

12. A method according to claim 10 or 11, comprising a further step of in response to determining that said scheduling request is related to said direct communication, starting a timer and transmitting said resource grant within a predetermined time measured by said timer.

13. A method according to any one of claims 10 to 12, wherein said determining step comprises determining whether said scheduling request is related to said cellular communication or whether it may be related to either said direct communication or said cellular communication in dependence upon a resource that said scheduling request is located in and where said scheduling request is for either said cellular or said direct communication, allocating an uplink grant with sufficient resource to accommodate status reports for either said cellular communication or said direct communication.

14. A network node (20) comprising:
determining logic operable to determine from a received scheduling request whether said scheduling request is related to a cellular communication where uplink data is transmitted to at least one other user equipment via at least one network node or whether it may be related to a direct communication where said uplink data is transmitted directly to at least one other user equipment; and
transmitting logic operable in dependence upon said determining logic to transmit a resource grant granting a resource to said user equipment from said network node for transmitting a status report for said corresponding communication, said status report indicating an amount of said uplink data to be transmitted in said uplink communication.

15. A computer program operable when executed by a computer to control said computer to perform a method according to any one of claims 1 to 8 and 10 to 13.

## Patentansprüche

1. Verfahren, das auf einem Teilnehmergerät (50) durchgeführt wird, das Aufwärtsstreckenressourcen von einem Netzwerkknoten (20) innerhalb eines drahtlosen Netzwerks durchführt, zum Senden von Aufwärtsstreckendaten, Folgendes umfassend:
Auswählen einer Einplanungsanfrage und einer Ressource zum Senden der Einplanungsanfrage, wobei mindestens die Einplanungsanfrage oder die Ressource in Abhängigkeit davon ausgewählt werden, ob die Aufwärtsstreckendaten als eine zellulare Kommunikation, die mindestens über einen Netzwerkknoten gesendet wird, an mindestens ein anderes Teilnehmergerät oder als eine Direktkommunikation unmittelbar an mindestens ein anderes Teilnehmergerät gesendet werden sollen;
Senden der Einplanungsanfrage auf der Ressource, wobei Senden der Einplanungsanfrage angibt, ob die Anfrage die zellulare Kommunikation betrifft oder die Direktkommunikation betreffen kann.

2. Verfahren nach Anspruch 1, wobei die Einplanungsanfrage auf einem physikalischen Aufwärtsstreckensteuerkanal gesendet wird, wobei ein Zeitpunkt des Sendens auf dem physikalischen Aufwärtsstreckensteuerkanal angibt, ob die Anfrage die Direktkommunikation oder die zellulare Kommunikation betrifft.

3. Verfahren nach Anspruch 1, wobei die Einplanungsanfrage auf einem von mindestens zwei verschiedenen physikalischen Aufwärtsstreckensteuerkanälen gesendet wird, wobei der physikalische Aufwärtsstreckensteuerkanal, auf dem die Einplanungsanfrage gesendet wird, angibt, ob die Anfrage die Direktkommunikation oder die zellulare Kommunikation betrifft.

4. Verfahren nach einem der Ansprüche 1 bis 3, wobei mehrere vorgegebene Ressourcen zum Senden von Einplanungsanfragen, welche die zellulare Kommunikation betreffen, für das Teilnehmergerät reserviert sind und eine Teilmenge der vorgegebenen Ressourcen zum Senden von Einplanungsanfragen reserviert ist, die entweder die unmittelbare Kommunikation oder die zellulare Kommunikation betreffen, wobei das Teilnehmergerät eine der vorgegebenen Ressourcen zum Senden der Einplanungsanfrage in Abhängigkeit davon auswählt, ob die Anfrage die zellulare oder die Direktkommunikation betrifft.

5. Verfahren nach einem der vorhergehenden Ansprüche, umfassend einen weiteren Schritt nach Empfang einer Ressourcenzuteilung, die dem Teilnehmergerät eine Ressource zuteilt, aus dem Netzwerkknoten, des Sendens eines Zustandsberichts über die Ressource, der einen Umfang der Aufwärtsstreckendaten angibt.

6. Verfahren nach Anspruch 5, umfassend kein Senden einer nachfolgenden Einplanungsanfrage, bis der Zustandsbericht gesendet wurde.

7. Verfahren nach einem der Ansprüche 1 bis 4, umfassend nach Senden der Einplanungsanfrage Einstellen eines Zeitgebers und als Reaktion auf Empfang einer Ressourcenzuteilung, die dem Teilnehmergerät eine Ressource zuteilt, aus dem Netzwerkknoten innerhalb eines Zeitraums, der durch den Zeitgeber eingestellt wurde, Senden eines Zustandsberichts über die Ressource, der einen Umfang der Aufwärtsstreckendaten angibt, und als Reaktion darauf, dass keine Ressourcenzuteilung innerhalb des Zeitraums empfangen wird, erneutes Senden der Einplanungsanfrage zu einem späteren Zeitpunkt.

8. Verfahren nach einem der Ansprüche 1 bis 5, wobei nach Senden der Einplanungsanfrage, wenn die Aufwärtsstreckendaten als die Direktkommunikation gesendet werden sollen und eine nächste Gelegenheit zum Senden der Einplanungsanfrage eintritt, bevor die Ressourcenzuteilung empfangen wurde, erneutes Senden der Einplanungsanfrage bei der nächsten Einplanungsanfragegelegenheit.

9. Teilnehmergerät (50), Folgendes umfassend:
mindestens einen Sendepuffer zum Speichern von Aufwärtsstreckendaten vor dem Senden der Aufwärtsstreckendaten;
Auswähllogik, die als Reaktion auf Detektieren von Daten in dem mindestens einen Sendepuffer betriebsfähig ist, eine Einplanungsanfrage und eine Ressource zum Senden der Einplanungsanfrage auszuwählen, wobei mindestens die Einplanungsanfrage oder die Ressource in Abhängigkeit davon ausgewählt werden, ob die Aufwärtsstreckendaten als eine zellulare Kommunikation, die mindestens über einen Netzwerkknoten gesendet wird, an ein anderes Teilnehmergerät oder als eine Direktkommunikation unmittelbar an mindestens ein anderes Teilnehmergerät gesendet werden sollen; und
Sendelogik zum Senden der ausgewählten Einplanungsanfrage auf der Ressource, wobei Senden der Einplanungsanfrage angibt, ob die Anfrage die zellulare Kommunikation betrifft oder die Direktkommunikation betreffen kann.

10. Verfahren, das auf einem Netzwerkknoten durchgeführt wird, zum Zuweisen von Ressourcen zur Aufwärtsstreckenkommunikation, Folgendes umfassend:
Empfangen einer Einplanungsanfrage aus einem Teilnehmergerät;
Bestimmen aus der Einplanungsanfrage, ob die Einplanungsanfrage eine zellulare Kommunikation betrifft, bei der Aufwärtsstreckendaten an mindestens ein anderes Teilnehmergerät über mindestens einen Netzwerkknoten gesendet werden, oder ob sie eine Direktkommunikation betreffen kann, bei der die Aufwärtsstreckendaten unmittelbar an mindestens ein anderes Teilnehmergerät übertragen werden; und
in Abhängigkeit von dem Bestimmungsschritt, Senden einer Ressourcenzuteilung, die dem Teilnehmergerät eine Ressource zuteilt, aus dem Netzwerkknoten zum Senden eines Zustandsberichts für die entsprechende Kommunikation, wobei der Zustandsbericht einen Umfang der Aufwärtsstreckendaten angibt, die bei der Aufwärtsstreckenkommunikation übertragen werden sollen.

11. Verfahren nach Anspruch 10, wobei der Bestimmungsschritt ein Bestimmen, ob die Einplanungsanfrage die zellulare Kommunikation oder die Direktkommunikation betrifft, in Abhängigkeit von mindestens einem des Folgenden umfasst:
einem Zeitschlitz innerhalb eines physikalischen Aufwärtsstreckensteuerkanals, in dem die Einplanungsanfrage lokalisiert ist; und
einem physikalischen Aufwärtsstreckensteuerkanal, in dem die Einplanungsanfrage lokalisiert ist.

12. Verfahren nach Anspruch 10 oder 11, umfassend einen weiteren Schritt, als Reaktion auf ein Bestimmen, dass die Einplanungsanfrage die Direktkommunikation betrifft, des Startens eines Zeitgebers und des Sendens der Ressourcenzuteilung innerhalb eines vorgegebenen Zeitraums, der durch den Zeitgeber gemessen wird.

13. Verfahren nach einem der Ansprüche 10 bis 12, wobei der Bestimmungsschritt ein Bestimmen umfasst, ob die Einplanungsanfrage die zellulare Kommunikation betrifft oder ob sie entweder die Direktkommunikation oder die zellulare Kommunikation in Abhängigkeit von einer Ressource betreffen kann, in der die Einplanungsanfrage lokalisiert ist, und wenn die Einplanungsanfrage entweder für die zellulare oder die Direktkommunikation ist, des Zuteilens einer Aufwärtsstreckenzuteilung mit ausreichenden Ressourcen, um Statusberichte entweder für die zellulare Kommunikation oder die Direktkommunikation zu erfüllen.

14. Netzwerkknoten (20), Folgendes umfassend:
Bestimmungslogik, die betriebsfähig ist, aus einer empfangenen Einplanungsanfrage zu bestimmen, ob die Einplanungsanfrage eine zellulare Kommunikation betrifft, bei der Aufwärtsstreckendaten an mindestens ein anderes Teilnehmergerät über mindestens einen Netzwerkknoten gesendet werden, oder ob sie eine Direktkommunikation betreffen kann, bei der die Aufwärtsstreckendaten unmittelbar an mindestens ein anderes Teilnehmergerät übertragen werden; und
Sendelogik, die betriebsfähig ist, in Abhängigkeit von der Bestimmungslogik eine Ressourcenzuteilung, die dem Teilnehmergerät eine Ressource zuteilt, aus dem Netzwerkknoten zum Senden eines Zustandsberichts für die entsprechende Kommunikation zu senden, wobei der Zustandsbericht einen Umfang der Aufwärtsstreckendaten angibt, die bei der Aufwärtsstreckenkommunikation übertragen werden sollen.

15. Computerprogramm, das betriebsfähig ist, wenn es durch einen Computer ausgeführt wird, den Computer zu steuern, ein Verfahren nach einem der Ansprüche 1 bis 8 und 10 bis 13 durchzuführen.

## Revendications

1. Procédé, réalisé au niveau d'un équipement (50) d'utilisateur, de demande de ressource de liaison montante auprès d'un nœud (20) de réseau au sein d'un réseau sans fil, pour transmettre des données de liaison montante, comprenant :
la sélection d'une demande de programmation et d'une ressource pour la transmission de ladite demande de programmation, ladite demande de programmation et/ou ladite ressource étant sélectionnées suivant que lesdites données de liaison montante doivent être transmises en tant que communication cellulaire à au moins un autre équipement d'utilisateur, transmise via au moins un nœud de réseau, ou directement en tant que communication directe, à au moins un autre équipement d'utilisateur ;
la transmission de ladite demande de programmation sur ladite ressource, la transmission de ladite demande de programmation indiquant si ladite demande est liée à ladite communication cellulaire ou pourrait être liée à ladite communication directe.

2. Procédé selon la revendication 1, ladite demande de programmation étant transmise sur un canal physique de commande de liaison montante, un instant de transmission sur ledit canal physique de commande de liaison montante indiquant si ladite demande est liée à ladite communication directe ou à ladite communication cellulaire.

3. Procédé selon la revendication 1, ladite demande de programmation étant transmise sur un canal parmi au moins deux canaux physiques différents de commande de liaison montante, ledit canal physique de commande de liaison montante sur lequel ladite demande de programmation est transmise indiquant si ladite demande est liée à ladite communication directe ou à ladite communication cellulaire.

4. Procédé selon l'une quelconque des revendications 1 à 3, une pluralité de ressources prédéterminées étant réservée pour transmettre des demandes de programmation liées à ladite communication cellulaire pour ledit équipement d'utilisateur et un sous-ensemble desdites ressources prédéterminées étant réservé pour transmettre des demandes de programmation liées soit à ladite communication directe soit à ladite communication cellulaire, ledit équipement d'utilisateur sélectionnant une desdites ressources prédéterminées pour transmettre ladite demande de programmation suivant que ladite demande est liée à ladite communication cellulaire ou ladite communication directe.

5. Procédé selon l'une quelconque des revendications précédentes, comprenant une étape supplémentaire, suite à la réception d'une attribution de ressource attribuant une ressource audit équipement d'utilisateur en provenance dudit nœud de réseau, de transmission sur ladite ressource d'un rapport d'état indiquant une quantité desdites données de liaison montante.

6. Procédé selon la revendication 5, comprenant la non-transmission d'une demande de programmation subséquente jusqu'à ce que ledit rapport d'état ait été transmis.

7. Procédé selon l'une quelconque des revendications 1 à 4, comprenant, suite à la transmission de ladite demande de programmation, le réglage d'un temporisateur, et en réaction à la réception d'une attribution de ressource attribuant une ressource audit équipement d'utilisateur en provenance dudit nœud de réseau dans la limite d'un temps spécifié par ledit temporisateur, la transmission sur ladite ressource d'un rapport d'état indiquant une quantité desdites données de liaison montante, et en réaction à l'absence de réception d'une attribution de ressource dans la limite dudit temps, la transmission renouvelée de ladite demande de programmation à un instant ultérieur.

8. Procédé selon l'une quelconque des revendications 1 à 5, dans lequel, suite à la transmission de ladite demande de programmation, lorsque lesdites données de liaison montante doivent être transmises en tant que ladite communication directe et lorsqu'une opportunité suivante de transmission de demande de programmation survient avant que ladite attribution de ressource ait été reçue, la retransmission de ladite demande de programmation lors de ladite opportunité suivante de demande de programmation.

9. Équipement (50) d'utilisateur comprenant :
au moins un tampon de transmission servant à stocker des données de liaison montante avant de transmettre lesdites données de liaison montante ;
une logique de sélection exploitable, en réaction à la détection de données dans ledit ou lesdits tampons de transmission, pour sélectionner une demande de programmation et une ressource pour la transmission de ladite demande de programmation, ladite demande de programmation et/ou ladite ressource étant sélectionnées suivant que lesdites données de liaison montante doivent être transmises en tant que communication cellulaire à un autre équipement d'utilisateur, transmise via au moins un nœud de réseau, ou directement en tant que communication directe, à au moins un autre équipement d'utilisateur ; et
une logique de transmission servant à transmettre ladite demande de programmation sélectionnée sur ladite ressource, la transmission de ladite demande de programmation indiquant si ladite demande est liée à ladite communication cellulaire ou pourrait être liée à ladite communication directe.

10. Procédé, réalisé au niveau d'un nœud de réseau, d'affectation de ressources pour des communications de liaison montante, comprenant :
la réception, en provenance d'un équipement d'utilisateur, d'une demande de programmation ;
la détermination, à partir de ladite demande de programmation, du fait que ladite demande de programmation soit liée ou non à une communication cellulaire où des données de liaison montante sont transmises à au moins un autre équipement d'utilisateur, transmise via au moins un nœud de réseau, ou qu'elle puisse être liée à une communication directe où lesdites données de liaison montante sont transmises directement à au moins un autre équipement d'utilisateur ; et
en fonction de ladite étape de détermination, la transmission d'une attribution de ressource attribuant une ressource audit équipement d'utilisateur en provenance dudit nœud de réseau pour transmettre un rapport d'état relatif à ladite communication correspondante, ledit rapport d'état indiquant une quantité desdites données de liaison montante à transmettre dans ladite communication de liaison montante.

11. Procédé selon la revendication 10, ladite étape de détermination comprenant la détermination du fait que ladite demande de programmation soit liée à ladite communication cellulaire ou à ladite communication directe en fonction d'au moins un élément parmi :
un créneau temporel au sein d'un canal physique de commande de liaison montante dans lequel est située ladite demande de programmation ; et
un canal physique de commande de liaison montante dans lequel est située ladite demande de programmation.

12. Procédé selon la revendication 10 ou 11, comprenant une étape supplémentaire, en réaction à une détermination selon laquelle ladite demande de programmation est liée à ladite communication directe, de lancement d'un temporisateur et de transmission de ladite attribution de ressource dans la limite d'un temps prédéterminé mesuré par ledit temporisateur.

13. Procédé selon l'une quelconque des revendications 10 à 12, ladite étape de détermination comprenant la détermination du fait que ladite demande de programmation soit liée à ladite communication cellulaire ou qu'elle puisse être liée soit à ladite communication directe soit à ladite communication cellulaire, en fonction d'une ressource dans laquelle est située ladite demande de programmation et, lorsque ladite demande de programmation est soit pour ladite communication cellulaire soit pour ladite communication directe, l'affectation d'une attribution de liaison montante avec une ressource suffisante pour s'adapter à des rapports d'état soit pour ladite communication cellulaire soit pour ladite communication directe.

14. Nœud (20) de réseau comprenant :
une logique de détermination exploitable pour déterminer, à partir d'une demande de programmation reçue, si ladite demande de programmation est liée à une communication cellulaire où des données de liaison montante sont transmises à au moins un autre équipement d'utilisateur via au moins un nœud de réseau ou si elle pourrait être liée à une communication directe où lesdites données de liaison montante sont transmises directement à au moins un autre équipement d'utilisateur ; et
une logique de transmission exploitable, en fonction de ladite logique de détermination, pour transmettre une attribution de ressource attribuant une ressource audit équipement d'utilisateur en provenance dudit nœud de réseau afin de transmettre un rapport d'état pour ladite communication correspondante, ledit rapport d'état indiquant une quantité desdites données de liaison montante à transmettre dans ladite communication de liaison montante.

15. Programme d'ordinateur exploitable, lorsqu'il est exécuté par un ordinateur, pour commander ledit ordinateur de façon à réaliser un procédé selon l'une quelconque des revendications 1 à 8 et 10 à 13.
